# EUROPEAN PATENT APPLICATION

(11) **EP 2 199 599 A1**
(43) Date of publication of application: **23.06.2010**
(21) Application number: 08021969.4
(22) Date of filing: 18.12.2008
(51) Int. Cl.: F03B 11/08

(54) **A hydroelectric turbine with a debris expeller**

(71) Applicant: OpenHydro IP Limited, Dublin 2 (IE)
(72) Inventor: Ives, James, Dublin 2 (IE); Dunne, Paul, Drumcondra Dublin 9 (IE)
(74) Representative: O'Neill, Brian

(57) **Abstract**

A hydroelectric turbine which incorporates debris management means, and in particular means for removing debris from debris sensitive areas of the turbine, for example in the gap between the stator and rotor which form the main parts of the turbine, and on either side of which coils and magnets of a generator of the turbine are located, the debris management means preferably being in the form of a guide vane fixed to a rotor of the turbine such as to dislodge and/or break up any such debris.

## Description

### Field of the invention

The present invention relates to a hydroelectric turbine which incorporates debris management means, and in particular means for removing debris from debris sensitive areas of the turbine, for example in the gap between the stator and rotor which form the main parts of the turbine, and on either side of which coils and magnets of a generator of the turbine are located.

### Background of the invention

Due to the environmental damage which has been inflicted on the planet as a result of the burning of fossil fuels, renewable energy has finally begun to be given significant attention, with many projects being developed around solar energy, wind energy, and tidal power. Of these alternative forms of energy, tidal power is arguably the most attractive, given that tidal flows are entirely predictable and constant, unlike wind or solar energy which are relatively intermittent and therefore less dependable.

However, harnessing tidal energy does provide its own challenges, in particular with respect to the installation and maintenance of tidal power generators, for example hydro-electric turbines, which by the very nature of the operation of same must be located in relatively fast flowing tidal currents, and more than likely located on the seabed. In addition, in order to be economically viable these turbines must be built on a large scale. As a result the turbines and associated bases/supports are large and cumbersome components, and require significant heavy lifting and transport equipment in order to achieve deployment and retrieval for maintenance purposes. The use of such heavy lifting equipment is normally a hazardous undertaking, and is rendered even more dangerous when this equipment is operated at sea under difficult and unsteady conditions. As a result the retrieval process may take some time to complete. Furthermore, as the turbines are located on the seabed it is not generally possible or at least economically feasible to implement continuous visual monitoring of the turbines to check for damage to the turbine. Such damage is most likely to result from debris ingress, in particular between the stator and the rotor where the coils and magnets of the generator are located. Alternatively if a coil or magnet were to become dislodged it may cause damage to the remaining coils/magnets as a result of The relative movement between the stator and rotor during operation of the turbine.

It is therefore an object of the present invention to overcome the above mentioned problems.

### Summary of the invention

According to the present invention there is provided a hydroelectric turbine comprising a stator and a rotor between which is defined a substantially annular gap; characterised by debris management means for preventing the ingress of debris into the gap and/or actively removing debris from within the gap.

Preferably, the management means comprises a guide vane fixed to either the stator or the rotor and which vane during operation of the turbine undergoes rotation relative to the other of the stator and rotor.

Preferably, the vane is positioned and dimensioned to extend, in the axial direction with respect to the rotor, substantially across the width of the rotor.

Preferably, the guide vane is substantially rigid in order to be capable of dislodging and/or breaking up debris located in the gap.

Preferably, the guide vane is substantially flexible in order perform the function of sweeping debris out of the gap.

Preferably, the vane comprises an array of bristles.

Preferably, one or more debris contacting faces of the guide vane extend obliquely with respect to the direction of rotation of the rotor.

Preferably, the guide vane has a pair of opposed debris contacting faces which each extend obliquely with respect to the direction of rotation of the rotor.

Preferably, the guide vane is fixed to the stator and at least one debris release chute extends from adjacent the guide vane through the stator to provide an escape path for debris within the gap.

Preferably, the debris management means comprises at least one substantially flexible gasket mounted to either the stator or the rotor and dimensioned to extend substantially across the gap.

Preferably, the management means comprises a pair of gaskets spaced from one another.

Preferably, the or each gasket comprises an array of bristles.

Preferably, the or each gasket extends across the gap in a substantially radial direction with respect to the rotor.

As used herein, the term "debris" is intended to mean foreign material such as rock, sand, seaweed, man made or other waste, in addition to items or material originating from the turbine itself, for example a coil or magnet from the generator of the turbine.

### Brief description of the drawings

Figure 1 illustrates a schematic and partially sectioned view of hydroelectric turbine according to a first embodiment of the present invention;
Figure 2 illustrates an enlarged view of a portion of a rotor forming part of the turbine illustrated in figure 1,
Figure 3 illustrates a sectioned side elevation of the turbine illustrated in figure 1;
Figure 4 illustrates an alternative form of debris management means forming part of the turbine of the present invention;
Figure 5 illustrates a further alternative embodiment of a hydroelectric turbine according to the present invention; and
Figure 6 illustrates an additional alternative embodiment of a turbine according to the present invention.

### Detailed description of the drawings

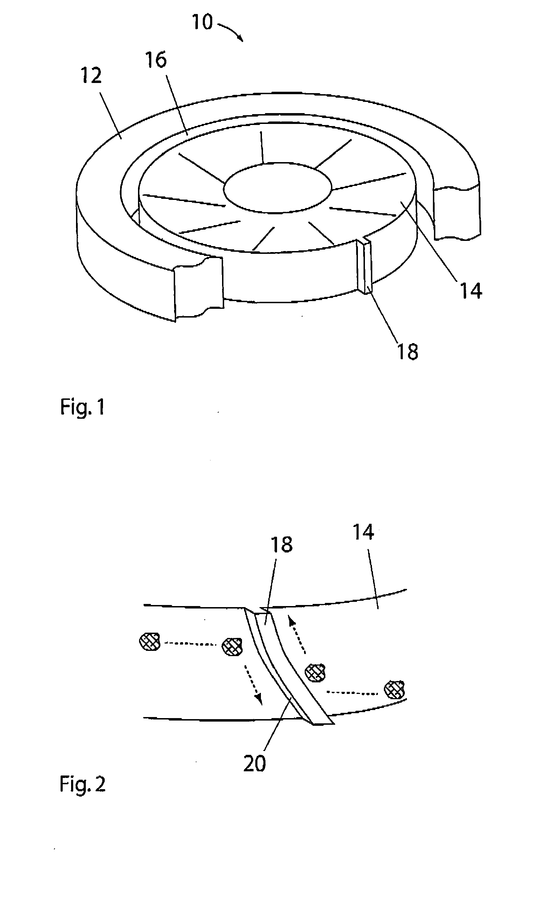

Referring now to figures 1 to 3 of the accompanying drawings there is illustrated a first embodiment of a hydroelectric turbine according to the present invention, generally indicated as (10), and which is preferably of an open centre design devoid of a central hub. The turbine (10) comprises a stator (12) which in use is mounted in an upright position, for example to a base fixed to the seabed, and within which is housed an open centred rotor (14). A water gap (16) is located between the stator (12) and the rotor (14) in order to provide clearance therebetween during rotation of the rotor (14).

The turbine (10) further comprises a rim-based generator (not shown), in which for example an array of magnets are fixed to the outer circumference of the rotor (14) and a corresponding array of coil are fixed to the inner circumference of the stator (12) across the water gap (16) from the magnets on the rotor (14). It will be appreciated that the position of the magnets and coils could be reversed, such that the coils are mounted on the rotor (14) and the magnets on the stator (12). In this way electricity may be generated by the turbine (10) in response to rotation of the rotor (14) relative to the stator (12) as a result of the tidal flow of water through the turbine (10). This type of rim based generator is described and shown in detail in co-pending European Patent Application No. 06014667.7.

The turbine (10) is provided with debris management means which in the embodiment illustrated are in the form of a guide vane (18) which is fixed to the outer circumference of the rotor (14) as illustrated. The guide vane (18) preferably but not essentially, extends across the full width of the rotor (14). The guide vane (18) is dimensioned, in particular in height, to extend substantially across the water gap (16) but not to contact the inner circumference of the stator (12). In the preferred embodiment illustrated the guide vane (18) is formed from a substantially rigid material, for example metal or the like. Thus during use the rotor (14) rotates within the stationary stator (12) as a result of the tidal flow of water through the turbine (10). As a result the guide vane (18) is displaced around the water gap (16), thus dislodging and/or breaking up any debris that may have migrated into the water gap (16). In addition, if a coil or magnet becomes dislodged from either the stator (12) or rotor (14) such as to protrude into the water gap (16), the guide vane (18), due to the rigidity thereof, will also be able to break up or dislodge the coil/magnet, and therefore allow the turbine (10) to continue to operate. This is particularly important due to the inaccessibility of the turbine (10) on the seabed, where continued operation is of primary importance, in order to avoid the requirement for regular retrieval of the turbine for maintenance purposes.

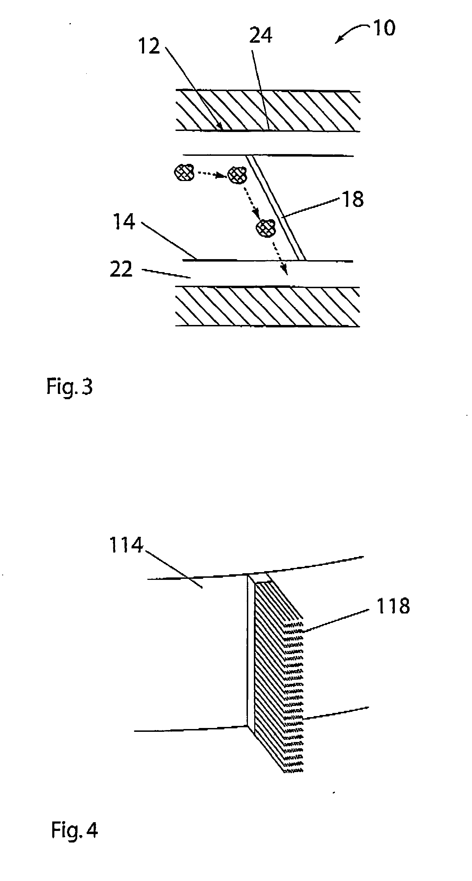

Referring to figure 2, the guide vane (18) is preferably positioned such that a debris contacting face (20) thereof is disposed at an oblique angle with respect to the direction of rotation of the rotor (14), and more particularly the guide vane (18). In this way as the guide vane (18) contacts debris within the water gap it will tend to push the debris laterally out of the water gap (16). Referring to figure 3 the debris can then migrate into a cavity (22) located between the rotor (14) and a pair of end caps (24) of the stator (12). From there the debris (D) may be directed to a debris release shoot or the like, for example as described and shown in European Patent No. EP1878911.

As the rotor (14), due to the reversing tide, rotate in both directions it is preferred that both contacting faces (20) of the guide vane (18) extend obliquely with respect to the direction of travel of the rotor (14). In the embodiment illustrated this is achieved by securing a flat plate of metal at an angle across the rotor (14). This could however be achieved in any number of alternative ways. In addition it will be appreciated that more than one guide vane (18) could be positioned on the rotor (14) and each guide vane (18) could also be shaped and/or contoured in various ways to achieve desired dispersal of the debris within the water gap (16).

Referring now to figure 4 there is illustrated a second embodiment of a turbine according to the present invention, in which only a rotor (114) is illustrated. In this second embodiment like components have been accorded like reference numerals, and unless otherwise stated perform a like function. Mounted to the rotor (114) are debris management mean in the form of a guide vane (118) which unlike the guide vane (18) of the first embodiment, is substantially flexible. In this embodiment this flexibility is achieved by forming the guide vane (118) from an array of bristles or the like. In this way the guide vane (118) will serve to clean or sweep debris out of the water gap (16) as opposed to breaking up any debris therein. As with the previous embodiment the guide vane (118) may be positioned at an angle across the rotor (114). It will also be appreciated that the guide vane (118) may be formed from any other suitable material, for example rubber or other flexible material.

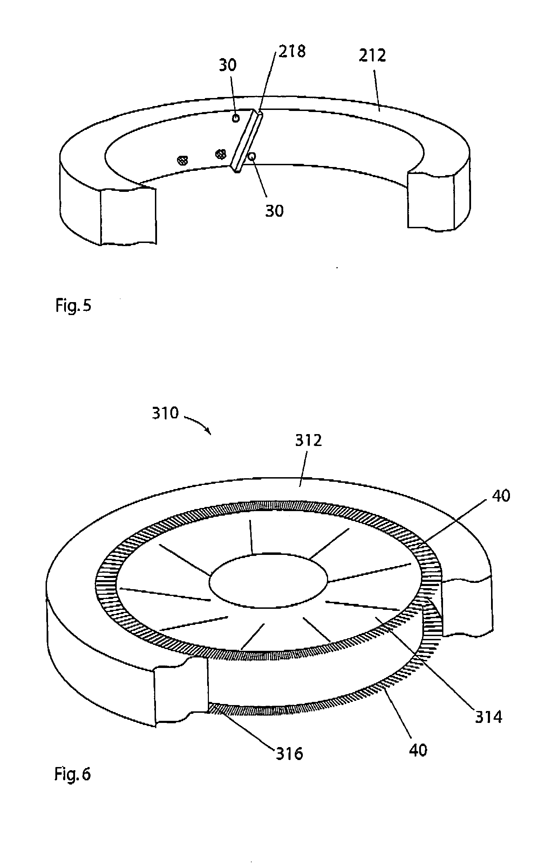

Referring now to figure 5 there is illustrated a third alternative embodiment of a turbine according to the present invention, in which only a stator (212) is illustrated. In this embodiment like components have been accorded like reference numerals, and unless otherwise stated perform a like function. Debris management means in the form of a guide vane (218) is provided but the guide vane (218) is mounted to the inner circumference of the stator (212). Although mounted to the stationary stator (212), during operation of the turbine there is relative movement between the rotor (not shown) and the stator (212), thus allowing the guide vane (218) to perform the debris clearing function. The guide vane (218) is again preferably disposed obliquely with respect to the direction of rotation of the rotor (not shown). Furthermore in this embodiment a pair of debris release shoots (30) are provided on either side of, and adjacent to, the guide vane (218). During operation of the turbine rotation of the rotor (not shown) within the stator (212) causes water within the water gap to rotate therewith. As a result debris entrained within the water in the water gap will be carried around the inner circumference of the stator (212) and into contact with the guide vane (218). The oblique orientation of the guide vane (218) will therefore enforce the debris towards the respective debris release shoot (30), and from there to be expelled from the water gap. Each debris release shoot is therefore preferably positioned at the downstream end of the guide vane (218) with respect to the direction of rotation of the rotor (not shown).

Referring now to figure 6 there is illustrated a further embodiment of a hydroelectric turbine according to the present invention, and generally indicated as (310). In this embodiment like components have been accorded like references numerals and unless otherwise stated perform a like function. The turbine (310) again comprises a stator (312) and a rotor (314) mounted for rotation therein. The turbine (310) comprises debris management means in the form of a pair of gaskets (40) extending from either the stator (312) or the rotor (314), and extending substantially across a water gap (316) defined therebetween. In the embodiment illustrated the gaskets (40) are comprised of an array of bristles, although it will be appreciated that they may be formed from any other suitable material. The gaskets (40) serve to prevent the ingress of debris into the water gap (316), in order to prevent damage to the working surfaces of the turbine (310). The gaskets (40) are preferably constructed to allow the flow of water in and out of the water gap (316) but prevent the ingress of debris, and in this regard bristles are a particularly suitable form. It will be appreciated that one or more guide vanes (not shown) as described above may be incorporated into the turbine (310) to operate in parallel with the gaskets (40). Thus any debris that did manage to enter the water gap (316) will be dislodged and/or broken up. Such a situation could arise if one or more coils or magnets were to become dislodged form the opposing faces of the stator (312) and rotor (314).

The present invention therefore provides a simple yet effective means for managing debris at debris sensitive parts of a hydroelectric turbine thus reducing the likely maintenance of the turbine.

## Claims

1. A hydroelectric turbine comprising a stator and a rotor between which is defined a substantially annular gap; **characterised by** debris management means for preventing the ingress of debris into the gap and/or actively removing debris from within the gap.

2. A hydroelectric turbine according to claim 1 in which the management means comprises a guide vane fixed to either the stator or the rotor and which vane during operation of the turbine undergoes rotation relative to the other of the stator and rotor.

3. A hydroelectric turbine according to claim 2 in which the vane is positioned and dimensioned to extend, in the axial direction with respect to the rotor, substantially across the width of the rotor.

4. A hydroelectric turbine according to claim 2 or 3 in which the guide vane is substantially rigid in order to be capable of dislodging and/or breaking up debris located in the gap.

5. A hydroelectric turbine according to claim 2 or 3 in which the guide vane is substantially flexible in order perform the function of sweeping debris out of the gap.

6. A hydroelectric turbine according to claim 5 in which the vane comprises an array of bristles.

7. A hydroelectric turbine according to any of claims 2 to 6 in which one or more debris contacting faces of the guide vane extend obliquely with respect to the direction of rotation of the rotor.

8. A hydroelectric turbine according to claim 7 in which the guide vane has a pair of opposed debris contacting faces which each extend obliquely with respect to the direction of rotation of the rotor.

9. A hydroelectric turbine according to any of claims 2 to 8 in which the guide vane is fixed to the stator and at least one debris release chute extends from adjacent the guide vane through the stator to provide an escape path for debris within the gap.

10. A hydroelectric turbine according to any preceding claim in which the debris management means comprises at least one substantially flexible gasket mounted to either the stator or the rotor and dimensioned to extend substantially across the gap.

11. A hydroelectric turbine according to claim 10 in which the management means comprises a pair of gaskets spaced from one another.

12. A hydroelectric turbine according to claim 10 or 11 in which the or each gasket comprises an array of bristles.

13. A hydroelectric turbine according to any of claims 10 to 12 in which the or each gasket extends across the gap in a substantially radial direction with respect to the rotor.
